# EUROPEAN PATENT APPLICATION

(11) **EP 4 556 303 A1**
(43) Date of publication of application: **21.05.2025**
(21) Application number: 24213452.6
(22) Date of filing: 15.11.2024
(51) Int. Cl.: B60L 58/13, B60L 3/00, B60L 58/12, B60L 58/16, B60L 58/22, H01M 10/42

(54) **BATTERY SYSTEM MANAGEMENT IN HIGH VOLTAGE SYSTEMS**

(30) Priority: 17.11.2023 EP 23210668
(71) Applicant: Volvo Truck Corporation, 405 08 Göteborg (SE)
(72) Inventor: HAMRIN, Alice, 417 06 GÖTEBORG (SE); TAMADONDAR, Masood, 431 30 MÖLNDAL (SE); TINTIGNAC, Sophie, 418 71 GÖTEBORG (SE); BHAVANI SHANKAR, Vijai Shankar, 414 78 GÖTEBORG (SE)
(74) Representative: Ström & Gulliksson AB

(57) **Abstract**

A computer system (300) comprising processing circuitry (302) configured to:
control at least a master battery management system adapted for a high voltage battery system (1) in an energy storage system, receive measurement data from sensors (5), ;
detect faulty battery pack (3A), based on said measurement data, determine or calculate an optimum level of state of charge for at least battery packs adjacent (3B, 3C) to said faulty battery pack (3A); and control a discharge of energy from battery packs (3B, 3C) adjacent to said faulty battery pack (3A) to on said determined or calculated optimum level of state of charge.

## Description

### TECHNICAL FIELD

The disclosure relates generally to battery management method and system. In particular aspects, the disclosure relates to battery management in high voltage systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In electrical vehicles, or hybrid electrical vehicles, having high voltage battery systems, intense thermal events caused by thermal runaway of the battery pack could potentially be detrimental to the function of the battery pack.

Therefore, in case thermal runaway is detected in battery pack the power limits for both charge and discharge are conventionally set to zero and high voltage contactors are commanded to be opened, to reduce the effect of the thermal runaway. This means that the high voltage systems is disconnected. The reason for setting the charge and discharge current limits to zero are often due to design limits and constraint in the typical HV system.

### SUMMARY

According to a first aspect of the disclosure, a computer system comprising processing circuitry configured to: control a battery management system adapted for a high voltage battery system in an energy storage system, receive measurement data from a plurality of sensors, wherein said measurement data comprises any one of voltages, current, temperatures, impedances, or combinations thereof, determine that at least one battery pack is a faulty battery pack, wherein said determination is based on said measurement data, determine an optimum level of state of charge for at least battery packs that are arranged adjacent to said faulty battery pack, wherein the optimum level of state of charge is based on said measurement data; and control a discharge of stored energy from said battery packs adjacent to said faulty battery pack to said determined optimum level of state of charge.

Optionally in some examples, including in at least one preferred example the processing circuitry may further be configured to determine a power limit discharge for the adjacent battery packs, wherein the power limit discharge is the maximum of stored energy and/or the maximum power level that can be discharged without causing battery safety violations.

The battery management system may be any one of a main or master battery management system or a battery management system connected to an individual battery management systems for each battery pack. By faulty battery pack is meant a battery pack that, based on detected measurement data appears to have reached or exceeded a certain probability, of for instance thermal runaway. The optimum level of SOC for the adjacent battery packs may thus be a level at which the probability and/or intensity of thermal runaway is low, and a level of SOC regarded as safe. At this optimum level of SOC it may further be safe or at least preferable to disconnect and/or remove the affected battery pack from the high voltage system. Said measurement data may comprise state of health indicators or parameters. The sensor or sensors may thus read, obtain or estimate state of health indicators that are influenced by any one of voltages, current, temperatures, impedances, or combinations thereof. The technical benefit may thus be that that based on the optimum level a more safe discharge of energy from the battery packs can be performed, while also minimizing the probability of a thermal runaway occurring in the battery packs adjacent to the faulty pack. The optimum level of SOC will depend on the type of battery pack, the age of the battery pack and other external and intrinsic factors influencing the optimum SOC level. The optimum level of SOC may be determined through testing of the battery packs, and may for instance be provided as a technical specification for each battery pack, which can be provided to said computer system, when installing said battery packs in said energy storage system. Such tests include e.g. for instance heating ramp, nail penetration, overcharge, and similar test protocols to characterize thermal runaway. The optimum level of SOC will also depend on the number of battery packs in the high voltage battery system. Conventionally the number of battery packs are in the range of from 2 to 8. The sensors sensor or sensors may read or estimate state of health indicators that are influenced by any one of voltages, current, temperatures, impedances, or combinations thereof.

Optionally in some examples, including in at least one preferred example the processing circuitry may further be configured to: determine or estimate state of health parameters of at least two individual battery pack zones within at least said faulty battery pack.

Optionally in some examples, including in at least one preferred example the processing circuitry may further be configured to: determine or estimate a state of health of at least three individual battery pack zones within at least said faulty battery pack.

A technical benefit may include that it is possible to map out or determine a more exact location of a potential thermal runaway within a battery pack, and control the discharge of energy from adjacent battery packs such that those battery packs closest to a failing or faulty battery pack zone may be discharged to a lower level of SOC before those adjacent cells furthest from the zone. The individual zones may be monitored by for instance a sensor such as a thermocouple directed to specific zones of the battery pack.

Optionally in some examples, including in at least one preferred example the processing
circuitry may further be configured to: electrically isolate said faulty battery pack from said high voltage battery system.

Optionally in some examples, including in at least one preferred example the processing circuitry may further be configured to: determine said optimum level of state of charge for each individual battery pack, wherein said optimum level of state of charge is different for each individual battery pack.

Optionally in some examples, including in at least one preferred example the processing circuitry may is further be configured to: maintain at least one main contactor closed during said power discharge of adjacent battery packs.

This means for instance that for one battery pack the optimum level may be at 50 % SOC and for another battery pack the optimum level of SOC may be at 30 %, based on a fully charged battery pack. This further means that through the present disclosure it is possible to maintain some of the stored energy in the battery packs adjacent to the faulty battery pack, i.e. they do not necessarily need to be discharged to zero percentage of stored energy. This means that in case the high voltage system is provided in for instance a vehicle, the vehicle may still be operated or driven to a more safe location where the faulty battery pack may be taken care of, and removed from the vehicle.

Optionally in some examples, including in at least one preferred example the processing circuitry may further be configured to: determine a discharge sequence for each individual adjacent battery pack; and control a sequential discharge to said optimum level of state of charge for each adjacent battery pack.

By sequential, or systematic, energy discharge is meant that the energy stored in the battery packs may be discharged sequentially, or in a systematic order, in accordance with the predetermined optimum level of SOC for each battery pack.

A technical benefit of determining the optimum level of SOC for each battery pack and controlling the discharge sequentially may include a better control of the discharge to a safe level.

In a second aspect, a computer-implemented method, comprising: receiving, by processing circuitry of a computer system, measurement data from a plurality of sensors, wherein said measurement data comprises any one of voltages, current, temperatures, impedances, or combinations thereof, determining, by the processing circuitry, that at least one battery pack is a faulty battery pack based on said measurement data, determining, by the processing circuitry, an optimum level of state of charge for at least battery packs that are arranged adjacent to said faulty battery pack based on said measurement data, controlling, by the processing circuitry, a discharge of energy from said battery packs adjacent to said faulty battery pack to said optimum level of state of charge.

Optionally in some examples, including in at least one preferred example the method further comprises determining a power limit discharge for the adjacent battery packs, wherein the power limit discharge is the maximum of stored energy and/or the maximum power level that can be discharged without causing battery safety violations.

Optionally in some examples, including in at least one preferred example, further comprising continuously updating, by the processing circuitry, the discharge power limit.

Optionally in some examples, including in at least one preferred example, the discharge power limit is determined using health parameters that are determined based on the measurement data retrieved from the plurality of sensors.

Optionally in some examples, including in at least one preferred example, the adjacent battery cells are non-faulty or healthy.

Optionally in some examples, including in at least one preferred example, a health parameter is related to the aging of the battery cell.

Optionally in some examples, including in at least one preferred example, the adjacent cells have been discharged to the optimum state of charge, said processing unit controls the opening of said main contactor.

Optionally in some examples, including in at least one preferred example, the optimum state of charge is determined to balancing thermal event intensity and re-usability of the healthy battery packs.

Optionally in some examples, including in at least one preferred example, the method further comprises obtaining reference data of the battery packs, wherein said reference data is used to determine the optimum state of charge.

Optionally in some examples, including in at least one preferred example, a determined discharge power limit is adapted such that said high voltage battery packs can be safely discharged.

Optionally in some examples, including in at least one preferred example the method may further comprise: determining or estimating a state of health of at least two individual battery pack zones within at least said faulty battery pack, by the processing circuitry of the computer system.

Optionally in some examples, including in at least one preferred the method may further comprise: determining or estimating a state of health of at least three individual battery pack zones within at least said faulty battery pack, by the processing circuitry of the computer system.

Optionally in some examples, including in at least one preferred example the method may further comprise determining a discharge sequence for each individual adjacent battery pack, by the processing circuitry of the computer system, and controlling a sequential discharge of energy to said optimum level of state of charge for each adjacent battery pack, by the processing circuitry of the computer system.

Optionally in some examples, including in at least one preferred example The method may further comprise providing said discharged energy from an adjacent battery pack to a battery pack other than said adjacent battery back.

This means that if for instance a battery pack adjacent to a faulty or failing battery pack is controlled to be discharged, and a battery pack outer than or outside, i.e. more far removed than the adjacent battery pack, from the failing battery pack has capacity to receive more power, the processing circuitry may provide said discharged power to that battery pack. This may also be combined with utilizing the discharged power in auxiliary systems, such as auxiliary vehicle systems including cooling systems and brake resistors.

Optionally in some examples, including in at least one preferred example the method may therefore further comprise: controlling auxiliary systems to utilize the discharged energy, by the processing circuitry of the computer system.

Optionally in some examples, including in at least one preferred example said auxiliary systems may comprise any one of a battery cooling system, auxiliary vehicle systems, a temperature control system, adapted for controlling the temperature inside a vehicle cabin, a high voltage resistor, and a brake resistor.

A technical benefit of utilizing the discharged energy, or discharged stored energy, in auxiliary systems, such as different vehicle systems, including heating or cooling systems etc., may be that it is easier to reach the optimum state of charge for each battery pack, since the power is diverted and hence used in other systems. This may be beneficial in situations where the battery packs have a high initial state of charge, and increases the amount of power that can be discharged from the battery packs. Further to this, if the discharged power is for instance utilized in cooling of the battery packs, the potential propagation of a thermal runaway event may be more efficiently hindered. Using the brake resistor is also an efficient way of using excess power. Utilizing the discharged power in auxiliary systems may also, in one example, be combined with providing discharged power to the other battery packs, i.e. those located further away from the faulty battery pack in the high voltage system.

In a third aspect there is provided a computer program product comprising program code for performing, when executed by the processing circuitry, the method of the second aspect.

In a fourth aspect there is provide a non-transitory computer-readable storage medium comprising instructions, which when executed by the processing circuitry, cause the processing circuitry to perform the method of the second aspect.

In a fifth aspect there is provide a high voltage battery system comprising the computer system of the first aspect.

Optionally in some examples, including in at least one preferred example the high voltage system may further comprise: at least two battery packs, at least one battery management control unit, a plurality of sensors, being configured to measure and monitor state of health parameters of each of the battery packs, thereby providing measurement data for each of the battery packs to said battery management control unit, and a processing circuitry.

Optionally in some examples, including in at least one preferred example there is provided a vehicle comprising the computer system of the first aspect, and the high voltage system of the fourth aspect.

Optionally in some examples, including in at least one preferred example, the vehicle may comprise any one of an electrical vehicle or hybrid electrical vehicle.

According to one aspect of the disclosure, there is provided a computer system comprising processing circuitry configured to: control at least a main battery management system adapted for a high voltage battery system in an energy storage system, receive measurement data from sensors, detect a faulty battery pack, based on said measurement data, determine or calculate an optimum level of state of charge for at least battery packs adjacent to said faulty battery pack; and control a discharge of energy from said battery packs adjacent to said faulty battery pack based on said determined or calculated optimum level of state of charge.

In one aspect there is provided a computer-implemented method, comprising: receiving measurement data from sensors, by processing circuitry of a computer system, and detecting at least one faulty battery pack, by the processing circuitry of the computer system based on said measurement data or signals, determining the state of health of at least battery packs adjacent to said faulty battery pack based on measurement data from said sensors, by the processing circuitry of the computer system, determining or calculating a predetermined an optimum level of state of charge for each individual battery pack, by the processing circuitry of the computer system, controlling a discharge of energy from battery packs adjacent to said faulty battery pack to said optimum level of state of charge, by the processing circuitry of the computer system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is exemplary high voltage battery system according to an example.
FIG. 2 is a flow chart of a battery management method to according to one example.
FIG. 3 is a schematic diagram of a computer system for implementing examples disclosed herein.

### DETAILED DESCRIPTION

The detailed description set forth below provides information and examples of the disclosed technology with sufficient detail to enable those skilled in the art to practice the disclosure.

The target problem is to be able to safely discharge electrical charge stored in a high voltage battery system including multiple battery packs, in order to mitigate the intensity of a thermal event in case of thermal runaway in a battery cell or cells of the battery pack. The higher the state of charge of the battery pack, the more energy is stored and more intense the thermal event. Even if the thermal event with this solution might not be completely avoided, the intensity of it will be less due to decreased energy within the battery system and also the energy storage system could provide energy for longer time compared to conventional systems, thereby enabling operation in applications or scenarios were sudden loss of power is unacceptable. By allowing for a sequential discharge of power from the battery packs, the discharged power may thus for instance also be utilized to cool the battery system. This system and method may also contribute to ensure continued usage of HV system to allow user to achieve desired safe state instead of abruptly shutting down.

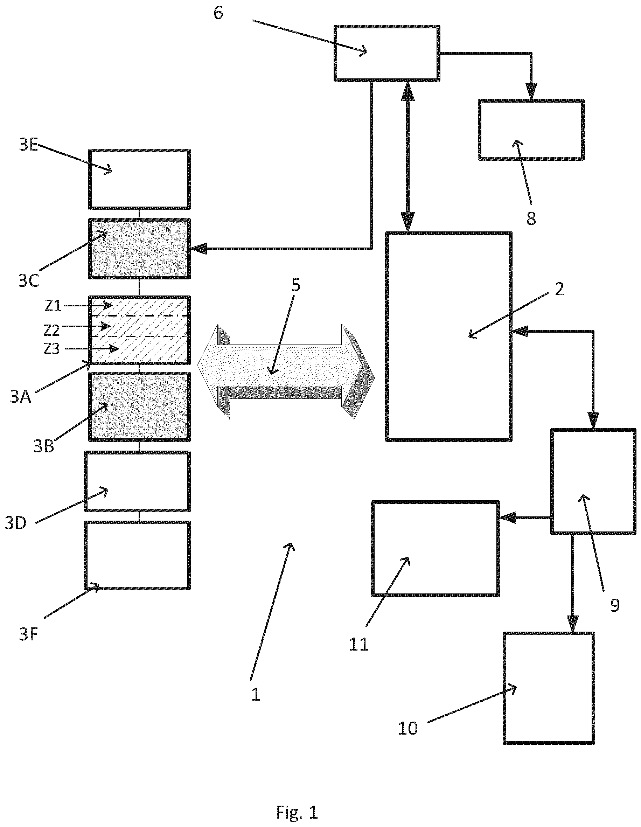

**FIG. 1** is an exemplary illustrates an exemplary high voltage battery system **1.** The high voltage system comprises a main or master battery management control unit **2,** or control unit **2.** The control unit **2** is coupled to at least one battery pack **3.** The high voltage system comprises at least one main or master battery management system and control unit, which is in connection with battery management systems controlling each of the battery pack **3A-3F** in the system. In **FIG. 1** the system **1** is exemplified having six battery packs **3A-3F.** Conventionally a battery system may comprise 2 to 8 battery packs, or more. The battery pack **3A-3F,** or each battery pack, comprises a plurality of battery cells (not shown). As illustrated in one example in **FIG. 1** the battery packs may be connected in parallel.

The control unit **2** is further coupled to at least one main contactor **6,** and controls the closing and opening of the main contactor **6.** In one example the control unit **2** is connected to at least two contactors **6** (not shown in the drawings). The main contactor 6 is connected to each of the battery packs **3A-3F** (only shown in **FIG. 1** as connected to **3B**) and to high voltage consumers **8** or other auxiliary systems of a vehicle. The high voltage consumers may comprise an inverter, the ACC (using high voltage heat pump), DCDC and on-board charger.

At least one sensor **5,** or a plurality of sensors, is connected to the battery packs **3A-3F** and to the control unit **2.** The at least one sensor **5** is configured to transmit measurement data to the control unit **2.** The measurement data may be any one of voltages, temperatures, impedance or a combinations thereof. The at least one sensor **5** may be configured to detect or measure parameters indicative of the state of health for the battery packs **3A-3F.** In one example, the sensor or sensors **5,** may monitor or measure state of health parameters in different zones **Z1-Z3** of an individual battery pack **3A.**

Note that the health parameters need not be the same as the recognized term state of health (SoH). Health parameters /indicators can be measured signals by the sensors which are fed as input to the SOH estimation functions (such as voltage, current, temperature, impedance). One could set a series of thresholds /limits for these signals to trigger the method described herein without using the SOH values. Other health parameters /indicators such as pressure increase, gas release could be used in our invention whereas they are not related to SOH estimation. As is known in the art, state of health is a calculated or estimated state of the battery, typically given 0-100% of initial capacity of the battery but may also comprise or reflect more parameters such as for example impedance. The sensor or sensors **5** may thus read or detect state of health parameters relating to any one of voltages, temperatures, impedances or combinations thereof. The sensor **5** or sensors may further be adapted to provide, to the control unit **2,** a location of a specific zone **Z1-Z3** in the battery pack **3.** The sensor or sensors **5** may submit or provide the control unit **2** with relevant measureable data or signals (current, voltage and temperature) allowing the control unit 2 to estimate the state of health parameters, for example using algorithms. In one
example the battery packs **3A-3F** may be connected to any type of thermal or electrical insulator, such as a fuse. The fuse may for instance be a thermal fuse or a switchable pyrotechnical fuse. When a thermal runaway is detected in a battery pack **3A,** i.e. an affected, failing or faulty battery pack, the faulty pack may in one example be electrically isolated from the rest of the high voltage battery system. By electrically isolated is meant that the faulty battery pack may be disconnected or in other ways electrically circumvented. The electrical isolation may be controlled by the control unit **2,** and the processing circuitry **302** of a computer system **300.** The battery management control unit **2,** and the processing circuitry **302** of computer system **300** is adapted to receive measurement signals or data from the sensor or sensors **5.** In one example, the measurement data is used to determine that at least one battery pack is a faulty battery pack. A faulty battery pack can be seen as an un-healthy battery pack. The measurement data or signals may be used to estimate or analyze the state of health of the battery packs and/or individual battery packs, and hence is able to detect a battery pack or battery packs which has a higher probability of experiencing a thermal runaway, or other malfunctions. Once a faulty battery pack, shown as battery cell **3A** in **FIG. 1****,** has been detected and located in the battery pack, the control unit **2** may be adapted to control the faulty pack **3A** to be electrically isolated, i.e. disconnected, from rest of the high voltage system. The control unit **2,** and the processing circuitry **302** of a computer system **300,** may further be adapted to determine the state of health for the battery packs **3B-3F** that are located adjacent to the faulty battery cell **4A,** through measurement data and input signals from the sensor or sensors **5.** If the most adjacent battery packs **4B, 4C** are estimated or detected to be not affected of a thermal runaway or propagation, the control unit **2** and the processing circuitry **302** of a computer system **300,** calculates or estimates a power limit discharge for these non-affected packs to an optimum state of charge, i.e. the maximum of stored energy in these battery packs that can be discharged from these non-affected packs without causing thermal runaway or cause other battery safety violations. In one example, the power limit discharge level may be a level where the maximum amount of stored energy, and/or the maximum power level, that can be discharged from the non-affected battery packs (healthy packs) without causing thermal runaway and/or cause other battery safety violations. The aim is to discharge the maximum of stored energy in the battery as fast as possible, while still maintaining safe operation. Hence, this translates into discharging the battery pack at the highest possible power (as energy = power over time) while maintaining safe operation. Ideally one would use maximum power to maximize the speed of the discharge. Safe operation may be maintained by controlling the battery pack against one or more limits. The power limit discharge may be a specific limit for this specific use, i.e. it might allow a higher discharge power limit that the usual operational limits. However, the power limit discharge is within the safety limits of the cells/packs. In one example, the power discharge level is the level to how the discharge should be performed in order to achieve the optimum state of charge.

This calculation or estimation may be performed taking into account that the faulty battery pack is non-operational or disconnected from the battery system.

The determination calculation of the optimum state of charge may be based on for instance a technical specifications for the optimum state of charge of each individual battery pack. The optimal state of charge is identified by technical specifications and rigorous testing (for instance heating ramp, nail penetration, overcharge, and similar test protocols to characterize thermal runaway) of individual battery packs. This optimal state of charge can in turn depend on the state of health of the battery pack. The technical specification may be provided to the control unit **2** or computer system when the battery pack is installed in the high voltage system.The optimum state of charge may be determined based on measurement data received from the plurality of sensors **5,** for example voltage, current and/or temperature of the battery cells or pack. The measurement data may be used to estimate a current state of charge. The current state of charge and the determination of the optimum state of charge may further be based on dataset and/or models representative of the battery pack. These data may for example relate to reference capacity, reference energy, open circuit voltage (OCV), resistance at different point in time (for example in the beginning of life of the battery pack), information relating to the ageing, information relating to the evolution of parameters during the operation and/or lifetime. These data may be used as a function of different other factors, such as for example temperature and current.

In one example, the control unit **2** is configured to determine an optimum level of state of charge based on measurement data from the sensors **5.** The control unit **2** may further be configured to obtain reference data of the battery pack, wherein said reference data is used to determine the optimum level of state of charge. The reference data may contain information relating to technical specifications, design restraints, information relating to ageing and evolution of parameters during the operation and/or lifetime.

In one example, the optimum level of state of charge is determined based on any one of technical specifications of the battery packs, the type and age of each battery pack, the number of battery packs in the high voltage battery system, predefined design restraints and state-of-power algorithm giving available power. The predefined design restraints may relate operating temperature, cell voltage, and/or maximum operating current limits.

The optimum state of charge is the level of state of charge that is determined to be optimum in order to achieve a sufficiently safe level of state of charge. In an optimum state of charge the consequences of thermal runaway is minimized and/or thermal runaway is prevented to propagate from the faulty battery pack to an adjacent battery pack. As is know in the art, the state of charge (SoC) level represents the energy level on a scale from 0 - 100% (where 0 is fully discharged and 100% is fully charged battery). The optimum level of state of charge may be a % arranged therein between as will be described more in detail later on.

In one example, the optimum state of charge may also be referred to as a safe state of charge level, a safe state of charge threshold, a safe state of charge target value or simply safe state of charge. The safe state of charge threshold is a level where the non-faulty packs (healthy packs) are either maximally safe with regard to thermal event, but with the risk that the will be non-reusable or are satisfactory safe with regard to thermal event but keeping the possibility to re-use the non-faulty pack. The safe state of charge level may thus be a safe level that compromises the risk of thermal event and the possibility to re-use the battery packs.

In one example, optimum state of charge or safe state of charge is based on balancing different criteria such as for example thermal event intensity versus re-usability of the healthy cells/packs. In one example, the optimum state of charge or safe state of charge is predetermined.

If the adjacent packs **3B, 3C** are determined or estimated to be at a certain probability of thermal runaway the control unit **2** and the processing circuitry **302** of a computer system **300,** may optionally further be adapted to control these packs to be electrically isolated, i.e. disconnected, from rest of the high voltage system. If the most adjacent packs **3B, 3C** are disconnected from the high voltage system, the control unit **2** and the processing circuitry **302** of a computer system **300,** is adapted to determine the state of health for the battery packs **3D, 3E** that are located outside of the most adjacent packs **3B, 3C,** and if these packs are non-affected by the thermal runaway or propagation, to calculate a power limit discharge for the non-affected packs **3D, 3E,** i.e. the maximum power or power level that can be discharged from these packs without causing thermal runaway or cause other battery safety violations.

The control unit **2,** and the processing circuitry **302** of a computer system **300,** may be adapted to control the discharge of power from the non-affected packs **(3B, 3C, 3D, 3E, 3F),** or control the operation of discharge, while maintaining the main contactor or contactors **6** closed or in a closed state, until all the non-affected battery packs of the battery system have been discharged to an optimum state of charge or contactors requested to be opened. At the optimum state of charge, the individual battery pack **3A-3F** has a safe level of charge for that specific type of battery pack.

Discharge power limit should be meant both as the level of power and the time for discharge is taken into account such that the discharge power does not cause the non-affected battery packs to develop additional faults, run into a faulty state, i.e. thermal runaway. In one example, the control unit **2** thus determines the faulty pack or packs, and disregard those packs from power limit calculation. The stored energy of non-affected or non-faulty cells is then discharged based on these discharge power limits calculated for the not yet faulty cells, to a predetermined or safe state of charge.

In some examples, the discharge power limit is determined such that the operating or safe voltage limits are not violated. Hence, the discharge power limit takes into account, by predicting, the maximum current and/or power that can be discharged so that the voltage drop, due to internal resistance/impedance, would not lead to a lower operating and/or safety voltage limit violation. In other words, the discharge power limit is a safety limit that is determined and/or predicted. In one example, the power limits are continuously re-estimated. In one example, the power limits are continuously updated. As the power limit, in some cases, does not account to faulty packs, the power limit determination may be continuously updated to take into account if new packs are considered faulty. Hence, in one example, the power limit does not take all packs into account - only the healthy packs (non-faulty packs).

The control unit **2,** and the processing circuitry **302** of a computer system **300,** may further be connected to, and control, other devices or apparatuses in a vehicle, such as auxiliary vehicle systems. In **FIG. 1** the control unit **2** is shown as connected to a vehicle control unit **9.** The vehicle control unit **9** may, in turn, be connected to a temperature control system **10** for controlling the temperature inside the vehicle cabin, or to a battery cooling system **11,** adapted to regulate the cooling of the battery packs **3A-3F.** The temperature control of the vehicle may be performed by any conventional systems and functions. The cooling or temperature control of the battery packs may also be performed by any conventional system or functions. In the present disclosure it is thus possible to utilize power discharged from the battery packs in the vehicle, or vehicle systems, to a maximum allowed capability by for example setting the cooling system **10** to maximum cooling effect, setting cooling system pumps to full speed, utilizing the inverter and/or resistor bank to consume the HV energy and cool the battery pack through the battery cooling system **11.** This means that the power discharged from non-affected battery packs in the battery system can be discharged or utilized in or to other vehicle systems or functions.

The control unit **2,** and the processing circuitry **302** of a computer system **300,** may also be configured to calculate or estimate, based on the measurement data, an optimum level of state of charge, or level of stored energy. This calculation or estimation of the optimum level of state of charge may be performed through conventional algorithms. In one example, in order to be able to calculate the pack level power discharge limits, also requires cell level State-of-Charge estimations, pack level internal resistance estimation and cell level temperature measurement/estimation. Typically, a battery pack has design restraints from the manufacturer, such as operating temperature, cell voltage and maximum operating current limits. Additionally, the State-of-power algorithm would give available power prediction such that the design restraints (pack temperature, SoC, voltage, current) will not be violated. For example, from a pack SoC it could be calculated what would be the corresponding "resting"/pack open circuit voltage. The pack voltage design restraints are known and for example in case of discharge power limits the current OCV minus the lower design voltage restraint would give the delta voltage drop that can be tolerated due to load and internal resistance. Delta voltage divided by the internal resistance would then give the power limit. However, due to diffusion resistance, the voltage drops also as a function of time, so depending on the algorithm and cell model used, either different internal resistances for different time horizons could be used to encounter that phenomena and to get power limits that would predict the available power over some time horizon.

In one example, the power discharged from the adjacent battery packs **3B, 3C** may be provided to other battery packs **3D, 3E** in the system, by the control unit **2,** or processing circuitry of the computer system. The control unit **2,** and the processing circuitry **302** of a computer system **300,** may also be configured to calculate or estimate, based on the measurement data, an optimum level of state of charge for each individual battery pack, and to control a sequential or systematic discharge of the battery packs. In one example, an order of priority of the sequential power discharge is assigned to each adjacent battery pack **3B-3E.** The order of priority can for instance be estimated or calculated based on the state of health for each individual battery pack, and their respective level of state of charge, or stored energy. In one example, once a faulty battery pack **3A** has been detected, the control unit **2** or processing circuitry **302,** may control the battery pack **3B** on a first side of the faulty or potentially failing battery pack to be discharged during a first discharge sequence to a 50 % SOC level, and once this this first discharge sequence has been performed, the battery pack **3C** adjacent to the faulty battery pack **3A** on a second side may be discharged to 50 % SOC level during its first discharge sequence. Once the first discharge sequence has been completed for the adjacent battery packs, the processing circuitry may control a second sequence of power discharge of the first adjacent battery pack **3B** to a 30% SOC level, and then of the second adjacent battery pack **3C** to a 30% SOC level. In one example, the optimum level of SOC is different for each individual battery pack, i.e. for the first adjacent battery pack the optimum level of SOC may be 50% and for the second adjacent battery pack it may be 40 %.

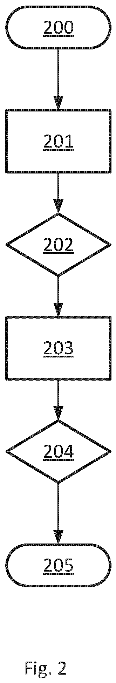

**FIG. 2** is a flow chart of a method, or a computer implemented method, to according to an example, which will be exemplified with the following steps. In step **200** the state of health of the battery packs **3A-3F** is estimated, or determined, by the control unit **2** (or a processing circuitry of a computer system), based on the measured current, voltage and temperature signals or data from the sensors **5.** In step **201** the control unit **2** determines or detects faulty or affected battery pack (or packs if several) **3A,** or zone **Z1-Z3** within the battery pack **3,** as well as battery packs **3B, 3C** adjacent to said faulty or failing pack that may be affected by the thermal runaway. These packs would then also be considered to be faulty or affected battery packs and could be disconnected, and the battery packs **3D, 3E,** that are located outside of the most adjacent battery packs would be controlled to discharge power. In step **202** all the faulty or affected battery packs **3A** are electrically isolated, or disconnected, from the high voltage system, in this step the main contactor **6** is optionally maintained in a closed state. In step **203** the control unit **2** determines and detects the non-affected battery packs **3B, 3C,** and calculates, possibly based on the estimated state of health of the non-affected packs, a discharge power limit, i.e. a predetermined power discharge, i.e. how much of the stored energy that can be discharged, to an optimum level of state, or level of stored energy, of charge. This level may be dependent/calculated based on the State of health, for each non-affected battery packs **3B-3F.** The power used for this discharge could be higher than what is normally allowed in order to decrease the time for discharge to safe state, since the battery health/life time can be sacrificed in order to faster improve safety. In step **204** the control unit **2** controls, or controls the operation of, the non-affected and adjacent battery packs **3B, 3C** to discharge power such that the battery pack reaches an optimum level of state of charge, or stored energy. At this optimum level of SOC it may be safe or at least preferable to disconnect and/or remove the affected battery pack from the high voltage system. Optionally the discharge of power may be performed within a preferable time or time range. This time could be based on an estimation of when the possibility of thermal propagation increases. In step **205** the control unit **2** may, optionally, control or control the operation of, the main contactor **6** to an open state.

Step **204** may further be performed sequentially or in a systematic manner. In one example, an order of priority of the sequential power discharge is assigned to each adjacent battery pack **3B-3E.** The order of priority can for instance be estimated or calculated based on the state of health for each individual battery pack, and their respective level of state of charge. According to one example, the starting location (i.e. the zone **Z1-Z3**) of the thermal runaway inside the first affected battery pack **3A** may be identified and used to set the order of priority and hence the order of the sequential discharge. For example, if the thermal runaway started in battery pack **3A** and in zone **3, Z3,** close to pack **3B** it might be more urgent to discharge **3B,** before starting to discharge 3C which is further away from the affected zone, **Z3,** so that **3B** reaches safe SOC level faster than what is possible with available discharge power if both **3B** and **3C** are discharged simultaneously. This means that battery pack **3B** is assigned a higher order of priority than battery pack **3C.**

In one example, a method is described as follows. The method comprises receiving, by processing circuitry **302** of a computer system **300,** measurement data from a plurality of sensors **5,** wherein said measurement data comprises any one of voltages, current, temperatures, impedances, or combinations thereof, determining, by the processing circuitry **302,** that at least one battery pack is a faulty battery pack **3A,** of the computer system **300** based on said measurement data, determining, by the processing circuitry **302,** an optimum level of state of charge for at least battery packs **3B, 3C** that are arranged adjacent to said faulty battery pack **3A** based on said measurement data, controlling, by the processing circuitry **302,** a discharge of energy from said battery packs **3B, 3C** adjacent to said faulty battery pack **3A** to said optimum level of state of charge.

In one example, the battery packs 3B, 3C are the battery packs most adjacent to the faulty battery pack.

In one example, the optimum level of state of charge is based on the health parameters of each battery pack and a technical specification provided to said computer system of each battery pack. The health parameters may be received from the sensors.

In one example, the method further comprises determining a power limit discharge. The power limit discharge is the maximum amount of stored energy, and/or the maximum power level, of stored energy in these battery packs that can be discharged for the battery packs **3B, 3C** adjacent said faulty battery pack **3A.**

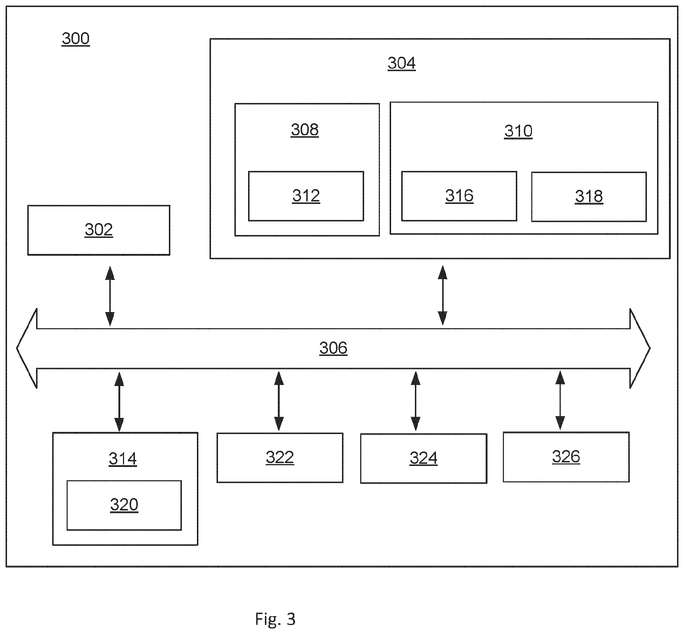

**FIG. 3** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device. The processing circuitry **302** of the computer system **300** may further perform the same method as described in **FIG. 2****,** i.e. the processing circuitry **302** is configured to perform the same method as the control unit **2.** In one example the control unit **2** includes or utilizes the processing circuitry **302.**

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The present disclosure will now be described by way of the following examples.

Example 1: A computer system 300 comprising processing circuitry 302 configured to: control at least a master battery management system adapted for a high voltage battery system 1 in an energy storage system, receive measurement data from sensors 5, determine or estimate a state of health of battery packs 3A-3F based on said measurement data; detect faulty battery pack 3A, based on said measurement data, determine or calculate an optimum level of state of charge for each individual battery pack 3A-3F or for at least battery packs adjacent 3B, 3C to said faulty battery pack; and control a discharge of energy from said battery packs 3B, 3C adjacent to said faulty battery pack 3A based on said determined or calculated optimum level of state of charge.

Example 2: The computer system 300 of example 1, wherein the processing circuitry 302 is further configured to: determine or estimate state of health parameters of at least two individual battery pack zones Z1, Z2 within at least said faulty battery pack 3A.

Example 3: The computer system 300 of example 2, wherein the processing circuitry 302 is further configured to: determine or estimate a state of health of at least three individual battery pack zones Z1, Z2, Z3 within at least said faulty battery pack 3A.

Example 4: The computer system 300 of any of examples 1-3, wherein the processing circuitry 302 is further configured to: electrically isolate said faulty battery pack 3 from said high voltage battery system 1.

Example 5: The computer system 300 of any of examples 1-4, wherein the processing circuitry 302 is further configured to: determine said optimum level of state of charge for each individual battery pack 3A-3F, wherein said optimum level of state of charge is different for each individual battery pack 3A-3F.

Example 6: The computer system 300 of any of examples 1-5, wherein the processing circuitry 302 is further configured to: maintain at least one main contactor 6 closed during said power discharge of adjacent battery packs 3B-3F.

Example 7: The computer system 300 of any of examples 1-6, wherein the processing circuitry 302 is further configured to: determine a discharge sequence for each individual adjacent battery pack 3B-3F; and control a sequential discharge to said optimum level of state of charge for each adjacent battery pack 3B-3F.

Example 8: A computer-implemented method, comprising: receiving measurement data from sensors 5, by processing circuitry 302 of a computer system 300, determining or estimating the state of health of battery packs 3A-3F based on said measurement data, by the processing circuitry 302 of the computer system 300; and detecting at least one faulty battery pack 3A, by the processing circuitry 302 of the computer system 300 based on said measurement data or signals, determining the state of health of battery packs 3B-3F adjacent to said faulty battery pack 3A based on measurement data from said sensors 5, by the processing circuitry 302 of the computer system 300, determining or calculating a predetermined, or an optimum, level of state of charge for each individual battery pack 3A-3F or at least battery packs 3B, 3C adjacent to said faulty battery pack 3A, by the processing circuitry 302 of the computer system 300, controlling a discharge of energy from battery packs 3B, 3 adjacent to said faulty battery pack 3A to said predetermined or optimum level of state of charge, by the processing circuitry 302 of the computer system 300.

Example 9: The method of example 8, further comprising: determining or estimating a state of health of at least two individual battery pack zones Z1, Z2 within at least said faulty battery pack 3A, by the processing circuitry 302 of the computer system 300.

Example 10: The method of example 9, further comprising: determining or estimating a state of health of at least three individual battery pack zones Z1, Z2 within at least said faulty battery pack 3A, by the processing circuitry 302 of the computer system 300.

Example 11: The method of any of examples 8 to 10, further comprising: determining a discharge sequence for each individual adjacent battery pack 3B-3F, by the processing circuitry 302 of the computer system 300, and controlling a sequential discharge of energy to said predetermined or optimum level of state of charge for each adjacent battery pack 3B-3F, by the processing circuitry 302 of the computer system 300.

Example 12: The method of any of examples 8 to 11, further comprising: providing said discharged energy from an adjacent battery pack 3B, 3C to a battery pack other than said adjacent battery back 3D, 3E.

Example 13: The method of any of examples 8 to 12, further comprising: controlling auxiliary systems to utilize the discharged energy, by the processing circuitry 302 of the computer system 300.

Example 14: The method of example 13, wherein said auxiliary systems comprises any one of a battery cooling system 11, auxiliary vehicle systems, a temperature control system 10, adapted for controlling the temperature inside a vehicle cabin, a high voltage resistor, and a brake resistor.

Example 15: A computer program product comprising program code for performing, when executed by the processing circuitry, the method of any of examples 8-14.

Example 16: A non-transitory computer-readable storage medium comprising instructions, which when executed by the processing circuitry, cause the processing circuitry to perform the method of any of examples 8-15.

Example 17: A high voltage battery system comprising the computer system of any of examples 1-7.

Example 18: The high voltage system according to example 17, further comprising: at least two battery packs 3A, 3B, at least one battery management control unit 2, a plurality of sensors 5, being configured to measure and monitor state of health parameters of each of the battery packs 3A, 3B, thereby providing measurement data for each of the battery packs to said at least one battery management control unit 2, and a processing circuitry 302.

Example 19: A vehicle comprising the computer system of any of examples 1-7, and the high voltage system of any of examples 17-18.

Example 20: The vehicle of example 19, wherein said vehicle is any one of an electrical vehicle or a hybrid electrical vehicle.

Example 21: A high voltage battery system 1 adapted for an energy storage system, wherein said system 1 comprises at least one main battery management control unit 2; at least two battery packs 3A, 3B each comprising a plurality of battery cells; a plurality of sensors 5 being configured to measure and monitor state of health parameters of each of the battery packs 3A, 3B, thereby providing measurement data for each of the battery packs to said main battery management control unit 2; at least one main contactor 6 arranged between each of the battery packs and a high voltage consumer 8 of said energy storage system and in connection with said main battery management control unit 2; wherein said battery management control unit 2 is configured to receive measurement data of said state of health parameters from said sensors 5; wherein if a faulty battery pack 3A is detected, said main control unit 2 is further configured to receive measurement data of state of health parameters for battery packs adjacent 3B, 3C to said faulty battery pack 3A, and to determine or calculate a predetermined discharge of energy, or power, based on a predetermined or optimum level of state of charge for each individual battery pack 3A-3F; and wherein said control unit 2 is further adapted to control a power discharge of said adjacent battery packs 3A, 3 to said optimum level of state of charge; and optionally to maintain said main contactor 6 closed until said adjacent battery packs 3B, 3C have been discharged to said optimum state of charge.

Example 22: The high voltage battery system 1 adapted for an energy storage system of example 21, wherein said main battery management control unit 2 is further configured to determine a power discharge sequence for each individual adjacent battery pack 3B-3F; and to control a sequential power discharge to said predetermined or optimum level of state of charge for each adjacent battery pack 3B-3F.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (300) comprising processing circuitry (302) configured to:
control a battery management system adapted for a high voltage battery system (1) in an energy storage system,
receive measurement data from a plurality of sensors (5), wherein said measurement data comprises any one of voltages, current, temperatures, impedances, or combinations thereof,
determine that at least one battery pack is a faulty battery pack (3A), wherein said determination is based on said measurement data,
determine an optimum level of state of charge for at least battery packs (3B, 3C) that are arranged adjacent to said faulty battery pack (3A), wherein the optimum level of state of charge is based on said measurement data; and
control a discharge of stored energy from said battery packs (3B, 3C) adjacent to said faulty battery pack (3A) to said determined optimum level of state of charge.

2. The computer system (300) of claim 1, wherein the processing circuitry (302) is further configured to:
determine a power limit discharge for the adjacent battery packs (3B, 3C), wherein the power limit discharge is the maximum of stored energy and/or the maximum power level that can be discharged without causing battery safety violations.

3. The computer system (300) of any of claims 1-2, wherein the processing circuitry (302) is further configured to: determine said optimum level of state of charge for each individual battery pack (3A-3F), wherein said optimum level of state of charge is different for each individual battery pack (3A-3F).

4. The computer system (300) of any of claims 1-3, wherein the processing circuitry (302) is further configured to: maintain at least one main contactor (6) closed during said power discharge of adjacent battery packs (3B-3F).

5. The computer system (300) of any of claims 1-4, wherein the processing circuitry (302) is further configured to:
determine a discharge sequence for each individual adjacent battery pack (3B-3F); and
control a sequential discharge to said optimum level of state of charge for each individual and/or adjacent battery pack (3B-3F).

6. A computer-implemented method, comprising:
receiving, by processing circuitry (302) of a computer system (300), measurement data from a plurality of sensors (5), wherein said measurement data comprises any one of voltages, current, temperatures, impedances, or combinations thereof,
determining, by the processing circuitry (302), that at least one battery pack is a faulty battery pack (3A), of the computer system (300) based on said measurement data,
determining, by the processing circuitry (302), an optimum level of state of charge for at least battery packs (3B, 3C) that are arranged adjacent to said faulty battery pack (3A) based on said measurement data,
controlling, by the processing circuitry (302), a discharge of energy from said battery packs (3B, 3C) adjacent to said faulty battery pack (3A) to said optimum level of state of charge.

7. The method of claim 6, further comprising:
determining, by the processing circuitry (302), a discharge sequence for each individual adjacent battery pack (3B-3F), , and
controlling, by the processing circuitry (302), a sequential discharge of energy to said optimum level of state of charge for each adjacent battery pack (3B-3F).

8. The method of any of claims 6 to 7, further comprising:
providing, by the processing circuitry (302), said discharged energy from an adjacent battery pack (3B, 3C) to a battery pack other than said adjacent battery back (3D, 3E); or
controlling, by the processing circuitry (302), auxiliary systems to utilize the discharged energy.

9. The method of claim 8, wherein said auxiliary systems comprises any one of a battery cooling system (11), auxiliary vehicle systems, a temperature control system (10), adapted for controlling the temperature inside a vehicle cabin, a high voltage resistor, and a brake resistor.

10. A computer program product comprising program code for performing, when executed by the processing circuitry, the method of any of claims 6-9.

11. A non-transitory computer-readable storage medium comprising instructions, which when executed by the processing circuitry, cause the processing circuitry to perform the method of any of claims 6-9.

12. A high voltage battery system comprising the computer system of any of claims 1-5.

13. The high voltage system according to claim 12, further comprising:
at least two battery packs (3A, 3B),
at least one battery management control unit (2);
a plurality of sensors (5), being configured to measure and monitor state of health parameters of each of the battery packs (3A, 3B), thereby providing measurement data for each of the battery packs to said battery management control unit (2), and
a processing circuitry (302).

14. A vehicle comprising the computer system of any of claims 1-5, and/or the high voltage system of any of claims 12-13.

15. The vehicle of claim 14, wherein said vehicle is any one of an electrical vehicle or a hybrid electrical vehicle.
